**Europäisches Patentamt**

**European Patent Office**

**Office européen des brevets**

(19)

(11) Veröffentlichungsnummer: **0 112 400**
**B1**

(12) # EUROPÄISCHE PATENTSCHRIFT

(45) Veröffentlichungstag der Patentschrift:
**24.02.88**

(21) Anmeldenummer: **82111935.1**

(22) Anmeldetag: **23.12.82**

(51) Int. Cl.⁴: **G 01 M 13/02**

(54) **Vorrichtung zur Einleitung von Kräften in Bauteile, insbesondere in Fahrzeugachsen, Radaufhängungen u.dgl.**

(43) Veröffentlichungstag der Anmeldung:
**04.07.84 Patentblatt 84/27**

(45) Bekanntmachung des Hinweises auf die Patenterteilung:
**24.02.88 Patentblatt 88/8**

(84) Benannte Vertragsstaaten:
**DE FR GB IT**

(56) Entgegenhaltungen:
**DE-A-2 201 590**

(73) Patentinhaber: **CARL SCHENCK AG,
Landwehrstrasse 55 Postfach 40 18, D-6100
Darmstadt (DE)**

(72) Erfinder: **Zuber, Günter, Berliner Strasse 16, D-6101
Messel (DE)**

(74) Vertreter: **Brand, Fritz, Dipl.- Ing., Carl Schenck
AG Patentabteilung Landwehrstrasse 55
Postfach 4018, D-6100 Darmstadt (DE)**

EP 0 112 400 B1

## Beschreibung

Die Erfindung betrifft eine Vorrichtung zur Einleitung von Kräften in Bauteile, insbesondere in Fahrzeugachsen, Radaufhängungen u.dgl., gemäß dem Oberbegriff des Patentanspruchs 1.

Eine derartige Vorrichtung zur Einleitung von Kräften in Bauteile ist aus der DE-A-2 201 590 bekannt. Eine weitere Vorrichtung von Kräften in Bauteile ist aus der DE-B-2 642 155 bekannt.

Diese Vorrichtung dient zur Einleitung von mehreren, in verschiedener Richtung wirkenden Kräften oder Kraftkomponenten, z. B. von Vertikal-, Längs- und Seitenkräften in das zu prüfende Bauteil. Die Kräfte oder Kraftkomponenten werden hierbei über ein mit dem zu prüfenden Bauteil verbundenes Krafteinleitungselement übertragen. Bei den zu prüfenden Einrichtungen handelt es sich besonders um Fahrzeugachsen, Radaufhängungen, Flugzeug- und Raumfahrzeugteile und ähnliche Bauteile oder Konstruktionen, bei denen in unterschiedlichen Richtungen wirkende Kräfte aufgebracht werden müssen.

Es sind weitere ähnliche Vorrichtungen zur Einleitung von Kräften in Bauteile bekannt, die jedoch alle für bestimmte Anwendungs- und Einsatzfälle noch Nachteile aufweisen. Es ist daher Aufgabe der vorliegenden Erfindung, eine Vorrichtung zur Einleitung von Kräften der eingangs genannten Art weiter zu verbessern und zu vereinfachen, bei der es in einer Ausführungsform auch möglich sein soll, im wesentlichen vertikal angeordnete bzw. wirkende Betätigungselemente, insdesondere hydraulische Betätigungszylinder vorzusehen.

Diese Aufgabe wird durch die in Patentanspruch 1 angegebenen Merkmale gelöst.

Die weiteren Ansprüche enthalten Ausgestaltungen der Erfindung.

Durch die Erfindung wird es möglich, auch für die Einleitung von Längs- und Seitenkräften vertikal oder mit Neigung zur Vertikalen angeordnete Betätigungszylinder zu verwenden, ohne daß aufwendige Stützkonstruktionen erforderlich sind. Die Betätigungszylinder können auf einfache Weise platzsparend auf dem Fundament befestigt werden. Besondere Befestigungsböcke für die Zylinder werden nichtbenötigt. Die im wesentlichen in vertikaler Richtung wirkenden Betätigungskräfte werden direkt in das Fundament eingeleitet. Darüber hinaus treten an den Betätigungszylindern praktisch keine Horizontalkräfte bzw. senkrecht zur Wirkungsrichtung angreifenden Kräfte auf, da diese von den Umlenkelementen aufgenommen werden. Bei den Umlenkelementen handelt es sich um einfache Bauteile, die auf dem Fundament platzsparend angeordnet und befestigt werden können.

Die Erfindung wird an Ausführungsbeispielen in den Zeichnungen schematisch dargestellt und in der Beschreibung näher erläutert. Es zeigen:

Fig. 1 Seitenansicht einer Vorrichtung nach der Erfindung zur Einleitung einer Seitenkraft in ein Prüfobjekt

Fig. 2 Darstellung der Bewegungsverhältnisse der Anordnung nach Fig. 1

Fig. 3 Ansicht einer Anordnung mit einem zusätzlichen Lenkerelement und einem Hilfslenker zur Aufbringung einer Längskraft

Fig. 4 Seitenansicht einer Anordnung nach Fig. 3

Fig. 5 Vorderansicht der Anordnung nach Fig. 1, wobei das Krafteinleitungselement mit Anschlußelementen seitlich versetzt gezeichnet ist

Fig. 6 Seitenansicht einer weiteren Vorrichtung zur Einleitung einer Seitenkraft.

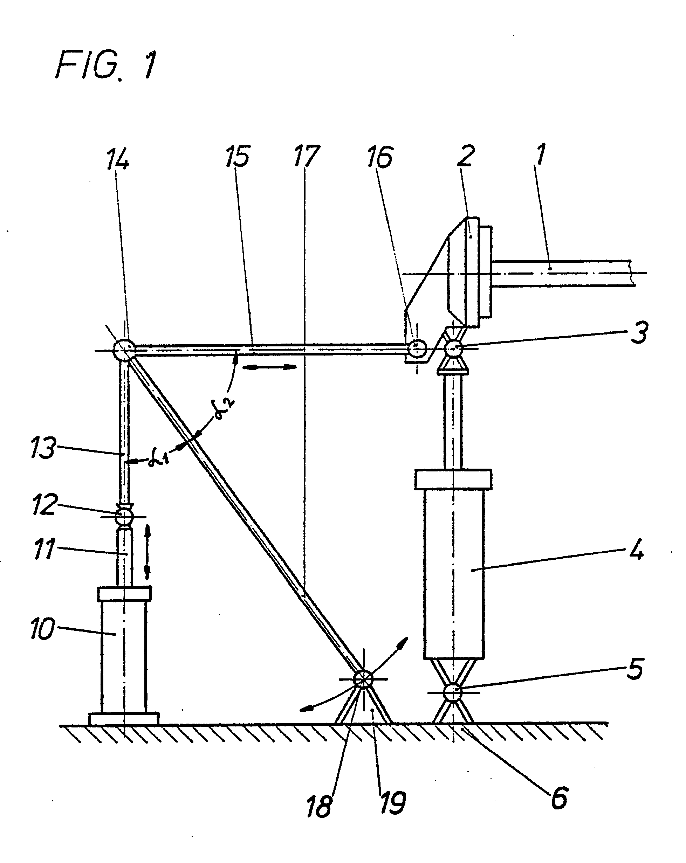

In Fig. 1 ist eine Fahrzeugachse 1 mit einem Krafteinleitungselement 2 nur schematisch angedeutet. Einzelheiten der Aufnahme der Fahrzeugachse in der Prüfvorrichtung usw. sind nicht dargestellt. Das Krafteinleitungselement 2 dient als Radersatz, nimmt die Prüfkräfte auf und leitet sie in die Achse ein. Über ein Gelenklager 3 können z. B. mit Hilfe eines vertikal angeordneten hydraulischen Betätigungszylinders 4 vertikale Kräfte auf das Krafteinleitungselement 2 bzw. auf die zu prüfende Achse übertragen werden. Der Betätigungszylinder 4 ist über ein Gelenk 5 auf dem Fundament 6 abgestützt.

Auf dem Fundament 6 ist ein weiteres Betätigungelement, z. B. ein hydraulischer Betätigungszylinder 10, angeordnet, der zur Erzeugung von Seitenkräften dient. Die Kolbenstange 11 des Betätigungszylinders 10 ist über ein Gelenk 12 und ein Zwischenelement 13 mit einem weiteren Gelenk 14 verbunden.

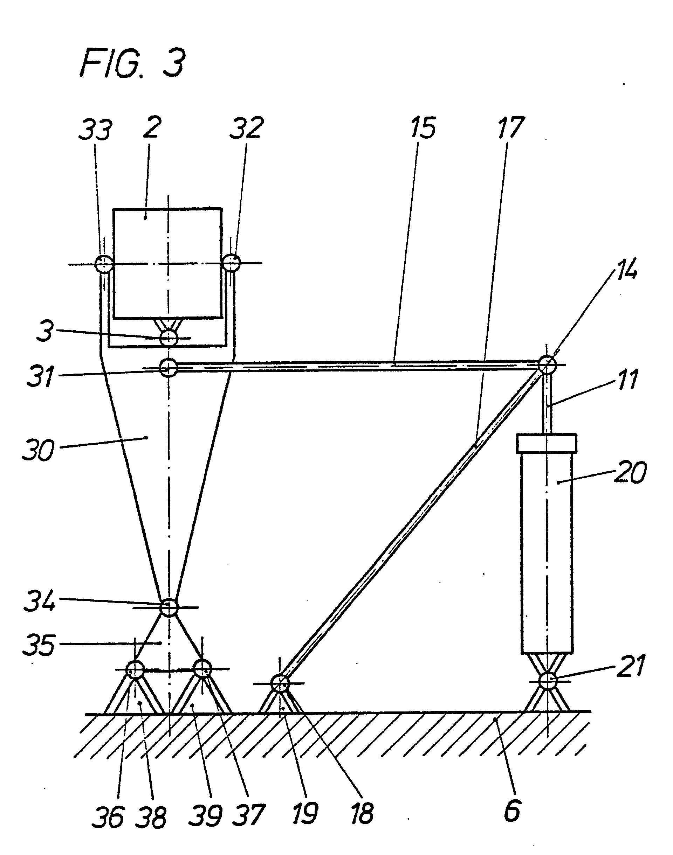

Der hydraulische Betätigungszylinder 10 kann ähnlich wie der Betätigungszylinder 4 auch über ein Gelenk auf dem Fundament abgestützt sein (s.a. Fig. 3, Betätigungszylinder 20 mit Gelenk 21). In diesem Fall kann das Zwischenelement 13 entfallen und die Kolbenstange 11 kann direkt mit dem Gelenk 14 verbunden werden.

Am Gelenk 14 ist etwa im rechten Winkel zur Wirkungsrichtung des Betätigungszylinders 10 bzw. des Zwischenelements 13 ein längliches Kraftübertragungselement 15 angeordnet, das über ein Gelenk 16 auf das Krafteinleitungselement 2 wirkt. Das Element 15 dient zur Übertragung der vom Betätigungszylinder 10 erzeugten Seitenkräfte auf das Krafteinleitungselement 2 bzw. auf das zu prüfende Bauteil. Das Kraftübertragungselement 15 kann z. B. stangenförmig ausgebildet sein und an seinen Enden geeignete Köpfe oder Lagerstellen für die Gelenkpunkte 14 und 16 aufweisen.

Am Gelenk 14 ist ein längliches Umlenkelement 17 angeordnet, das sich über eine drehbewegliche Abstützung bzw. über ein Gelenk 18 (Drehgelenk) an einem Festpunkt 19 auf dem Fundament 6 abstützt. Die Drehachse des Drehgelenks 18 steht etwa senkrecht auf der durch die Wirkungsrichtungen von Betätigungselement 10 und Kraftübertragungselement 15 gebildeten Ebene (im dargestellten Beispiel der Zeichenebene).

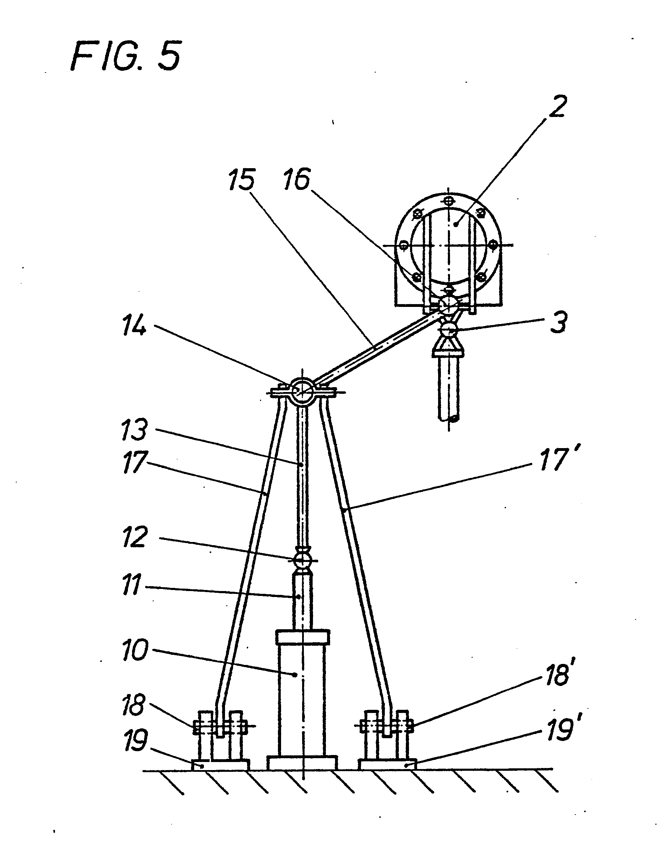

Das Umlenkelement 17 und das Gelenk 18 müssen so ausgebildet sein, daß der Gelenkpunkt 14 nur Bewegungen in der durch die Wirkungsrichtung des Betätigungszylinders 10 und des Kraftübertragungselements 15 gebildeten Ebene (Fig. 1:Zeichenebene) ausführen kann. Das Umlenkelement 17 besteht daher nach Fig. 5 zweckmäßig aus zwei Einzelelementen 17, 17', deren Festpunkte 19, 19' mit Drehgelenken 18, 18' mit Abstand voneinander auf dem Fundament 6 angeordnet sind. Die beiden Einzelelemente 17, 17' können dabei am Gelenk 14 zusammenlaufen und z. B. eine Art Lagergabel an diesem Gelenk bilden. Dadurch ergibt sich mit den beiden Einzelelementen 17, 17' ein Dreieckslenker, der sich um die beiden an den Festpukten 19, 19' auf dem Fundament 6 angeordneten Drehgelenke 18, 18' bewegen kann, so daß am Gelenk 14 auftretende seitliche Störkräfte (in Fig. 1 senkrecht zur Papierebene wirkende Kräfte) gut aufgenommen werden können. Das Kraftübertragungselement 15 ist im Gelenk 14 sphärisch gelagert.

Anstelle des Umlenkelements 17 bzw. der Umlenkelemente 17, 17' kann z. B. auch das Betätigungselement 10 mit der Kolbenstange 11 so angeordnet bzw. geführt werden, daß störende Seitenkräfte am Gelenk 14 aufgenommen werden.

Die Umlenkelemente 17, 17' sind so angeordnet, daß sie mit der Längsachse bzw. der Wirkungsrichtung des Betätigungszylinders 10 und mit dem Kraftübertragungselement 15 in der Projektion auf die Zeichenebene der Fig. 1 die Winkel $\alpha_1$ und $\alpha_2$ bilden. Wenn die beiden Winkel jeweils gleich 45° sind, beträgt das Umlenkverhältnis bei der dargestellten Anordnung 1 : 1, d. h. die Kraft des Betätigungszylinders 10 wirkt, von Reibungseinflüssen abgesehen, in gleicher Größe auch am Gelenkpunkt 16 des Krafteinleitungselements 2 bzw. am Prüfobjekt. Durch Verstellen des Festpunkts 19 (s. Doppelpfeil) können die Winkel $\alpha_1$ und $\alpha_2$ und damit das Umlenkverhältnis und die Kraftwirkung am Gelenk 16 bzw. am Prüfobjekt geändert werden.

Kleinere Winkel $\alpha_1$ als 45° ergeben am Gelenk 16 kleinere, größere Winkel ergeben entsprechend größere Kräfte als am Betätigungszylinder 10.

Die Umlenkelemente 17, 17' werden bei der Kraftumlenkung nur auf Zug oder Druck beansprucht. Sie können daher auf einfache Weise als stangen- oder rohrförmige Elemente ausgebildet werden. Die Enden dieser Elemente müssen so gestaltet sein, daß eine zweckmäßige gelenkige oder drehbewegliche Lagerung an den jeweiligen Lagerstellen möglich ist.

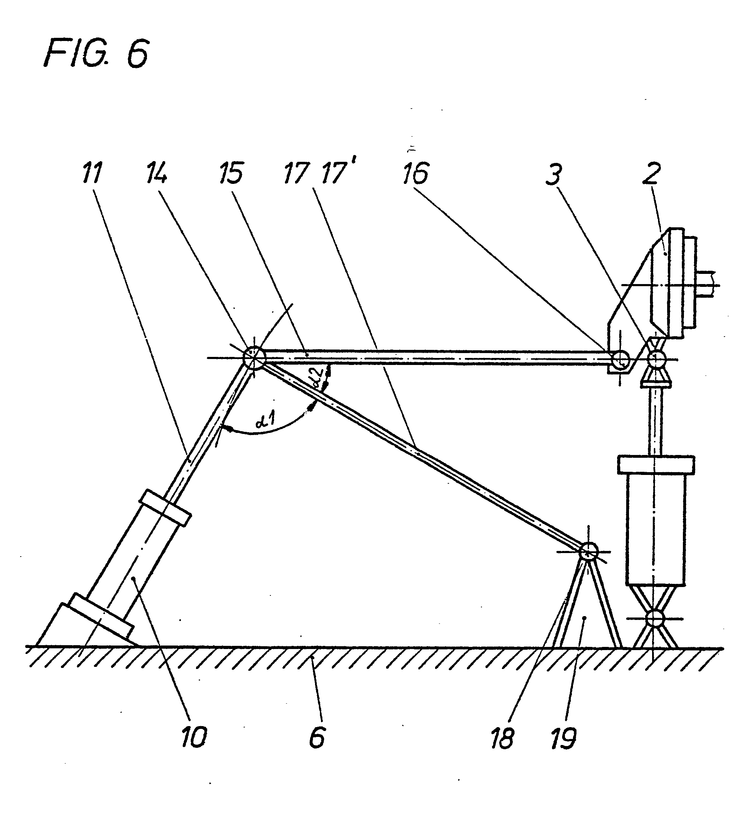

Durch die Anordnung von Umlenkelementen 17, 17' ist es möglich, mit Hilfe des im wesentlichen vertikal angeordneten und wirkenden Betätigungszylinders 10 Seitenkräfte auf das zu prüfende Objekt, z. B. die Radachse 1, aufzubringen, d. h. die Kraftrichtung kann auf einfache Weise um 90° bzw. ggf. auch um kleinere oder größere Winkel (s. Fig. 6) umgelenkt werden. Hierbei können die Betätigungszylinder unmittelbar oder über einfache Zwischenstücke auf dem Fundament angeordnet werden, so daß es sich erübrigt, aufwendige Stützkonstruktionen oder Böcke für die Zylinder vorzusehen. Die Anordnung ist auch für die Einleitung von Längskräften verwendbar (s. Fig. 3 u. 4).

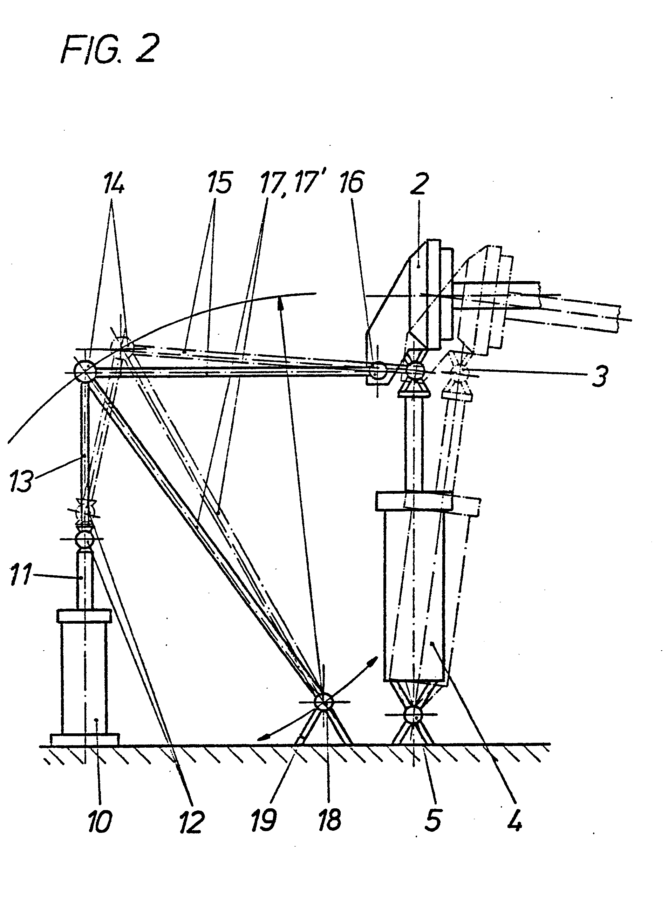

In Fig. 2 sind die Bewegungsverhältnisse der Anordnung nach Fig. 1 dargestellt. Das Gelenk 14 wird bei Bewegungen der Kolbenstange 11 und des Zwischenelements 13 bzw. bei Bewegungen des Gelenkpunkts 16 durch das Umlenkelement 17, 17' auf einem Kreisbogen um das Drehgelenk 18 geführt. Hierbei bewegen sich alle beweglichen Elemente der Anordnung (2 - 4, 11 - 17) in entsprechender Weise mit (strichpunktierte Darstellung). Da bei solchen Anordnungen im allgemeinen nur verhältnismäßig kleine Wege auftreten, bleiben Fehler durch Schrägstellung z. B. der Betätigungselemente oder der Kraftübertragungselemente, klein.

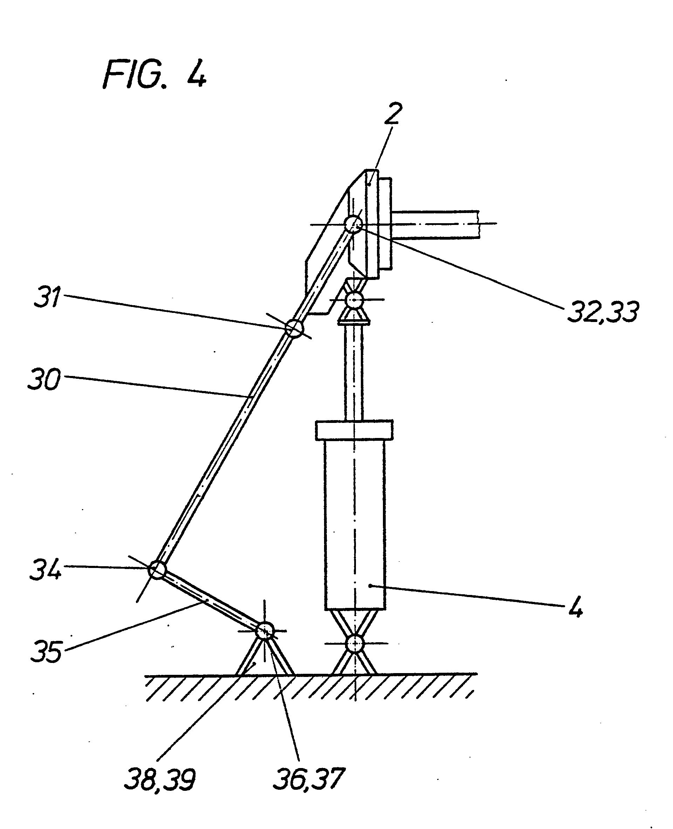

Die Figuren 3 und 4 zeigen in zwei Ansichten eine Anordnung mit einem zusätzlichen Lenkerelement und einem Hilfslenker zur Aufbringung einer Längskraft. Die Darstellung nach Fig. 3 entspricht in Bezug auf die Anordnung von Betätigungszylinder 20, Kolbenstange 11, Gelenk 14, Kraftübertragungselement 15, und Umlenkelement 17, 17' im wesentlichen der Anordnung nach Fig. 1. Der Betätigungszylinder 20 ist jedoch nicht fest auf dem Fundament 6 aufgebaut, sondern über ein Gelenk 21 an seinem Fuß gelenkig angeordnet, so daß das Zwischenstück 13 (Fig. 1) zwischen Kolbenstange 11 und Gelenk 14 entfallen kann.

In Fig. 4 sind die Teile 11, 14, 15, 17, 17', 18, 19, 20 und 21 der Fig. 3 nicht eingezeichnet. Diese Teile liegen im wesentlichen in einer senkrechten Ebene durch das Gelenk 31 und in der Zeichenebene der Fig. 3.

Das Kraftübertragungselement 15 greift im Ausführungsbeispiel nach den Figuren 3 und 4 nicht unmittelbar am Krafteinleitungselement 2 an, sondern ist mit einem Lenkerelement 30 über ein Gelenk 31 verbunden. Das Lenkerelement 30 ist an seinem einen Ende gabelförmig ausgebildet und weist an den Gabelenden Gelenke 32, 33 auf, über die es am Krafteinleitungselement 2 angeordnet ist. Die zu übertragenden Kräfte können hierbei beispielsweise in Radmitte bzw. Achsmitte in das zu prüfende Bauteil bzw. das Krafteinleitungselement 2 eingeleitet werden.

Das andere Ende des Lenkerelements 30 ist über ein Gelenk 34 mit einem Hilfslenker 35 verbunden. Der Hilfslenker 35 ist an zwei weiteren Gelenkpunkten 36, 37 drehbeweglich gelagert. Die Gelenkpunkte 36, 37 sind an Festpunkten 38, 39 auf dem Fundament 6 angeordnet. Sie können jedoch auch mit anderen festen Teilen der Prüfvorrichtung verbunden sein, z. B. mit der Abstützung eines Umlenkelements für eine andere Kraftkomponente. Die Festpunkte 38, 39 können auch verstellbar angeordnet werden, z. B. in der Anordnung nach Fig. 4 in der Zeichenebene nach links oder rechts verschiebbar.

Die Anordnung des Lenkerelements 30 und des Hilfslenkers 35 ermöglicht vertikale Bewegungen des Krafteinleitungselements 2 bzw. eines zu prüfenden Bauteils, wobei Vertikalkräfte beispielsweise durch den Vertikalzylinder 4 (Fig. 4) erzeugt werden können. Eine am Lenkerelement 30 im Gelenk 31 angreifende Längskraft erzeugt hierbei unabhängig von der vertikalen Auslenkung des Krafteinleitungselements 2 an den Gelenken 32, 33 und 34 immer die gleiche, den Hebelverhältnissen zwischen den Gelenken entsprechende Kraft. Darüberhinaus ermöglicht es die beschriebene Lenkeranordnung den Betätigungszylinder, z. B. den Längskraftzylinder 20, Fig. 3, und die dazugehörigen Gestänge aus der Radmittelebene bzw. aus der Mittelebene des Krafteinleitungselements 2 heraus zu verlegen (in Fig. 4 nach links).

Nach dem Ausführungsbeispiel gemäß Figur 6 kann das Betätigungselement 10 auch so angeordnet werden, daß der Winkel $\alpha_1$ zwischen Betätigungselement 10 und Umlenkelement 17, 17' etwa 90° beträgt. Zweckmäßigerweise wird in diesem Fall der Winkel $\alpha_2$ zwischen Umlenkelement 17, 17' und Kraftübertragungselement 15 kleiner als 45°, z. B. etwa 30° gewählt. Der Betätigungszylinder 10 wird hierbei leicht schräg in geeigneter Weise auf dem Fundament befestigt. Bei einer solchen Anordnung kann der Betätigungszylinder fest auf dem Fundament abgestützt werden, entsprechend dem Ausführungsbeispiel in Fig. 1, wobei jedoch das Zwischenelement 13 mit dem Gelenk 12 entfallen kann, da sich der Gelenkpunkt 14 bei kleinen Wegen der Kolbenstange 11 angenähert auf einer Geraden bewegt. Darüber hinaus kann der Bettigungszylinder 10 zur Erzeugung einer bestimmten Kraft am Gelenkpunkt 16 wegen der größeren Übersetzung kleiner gewählt werden. Auch das Umlenkelement 17, 17' wird für gleiche Kräfte am Gelenkpunkt 16 weniger belastet als bei der Anordnung nach Fig. 1.

Das Krafteinleitungselement, der Krafteinleitungspunkt, die Kraftübertragungs-, Zwischen- und Umlenkelemente sowie die Gelenkpunkte der beschriebenen Anordnungen können konstruktiv in verschiedener Weise ausgebildet werden. Die konstruktive Gestaltung dieser Elemente ist dem Fachmann jedoch bekannt, so daß sich weitere Einzelheiten erübrigen. Als Gelenke können alle geeigneten Gelenkausführungen verwendet werden, welche die an der jeweiligen Gelenkstelle erforderlichen Freiheitsgrade aufweisen, beispielsweise Kreuzfedergelenke, Plattfedergelenke, Drehgelenke, sphärische Gelenke usw..

Die Anordnung nach den Figuren 3 und 4 ist auch für die Einleitung von Seitenkräften verwendbar.

Die Anordnungen nach Fig. 1 bzw. 5 und 6 und Fig. 3/4 können zur gleichzeitigen Übertragung z. B. von Seiten- und Längskräften auf ein Prüfobjekt auch zusammen verwendet werden und auf das gleiche Krafteinleitungselement 2 wirken.

Die in den Figuren dargestellten Vorrichtungen zur Einleitung von Kräften in Bauteile können anstatt auf dem Fundament z. B. auch an einer stabilen Decke oder an Prüfgerüsten hängend angeordnet werden.

**Patentansprüche**

1. Vorrichtung zur Einleitung von Kräften in Bauteile, insbesondere in Fahrzeugachsen, Radaufhängungen und dgl., mit einem Krafteinleitungselement (2), das mit einem zu prüfenden Bauteil (1) verbindbar ist, mit einem Betätigungselement (10; 20), das sich an einem Festpunkt abstützt, mit einem länglichen, gestängeartigen Kraftübertragungselement (15), welches auf das Krafteinleitungselement (2) wirkt und so zum Betätigungselement (10; 20) angeordnet ist, daß seine Wirkungsrichtung mit der des Betätigungselements (10; 20) einen Winkel bildet, sowie mit einem an mindestens einem weiteren Festpunkt (19) über ein erstes Gelenk (18, 18') abgestützten Kraftumlenkungselement, dessen Wirkungsrichtung in einer von den genannten beiden Wirkungsrichtungen gebildeten Ebene liegt und das die vom Betätigungselement (10; 20) ausgeübte Betätigungskraft auf das Kraftübertragungselement (15) umlenkt, gekennzeichnet durch folgende Merkmale:
- das Kraftumlenkungselement ist als längliches, stangen- oder rohrförmiges Umlenkelement (17, 17') ausgebildet,
- das eine Ende des Umlenkelements (17, 17') ist mit einem das Betätigungselement (10; 20) und das Kraftübertragungselement (15) verbindenden zweiten Gelenk (14) verbunden,
- das andere Ende des Umlenkelements (17, 17') ist an das erste Gelenk (18, 18') angeschlossen,
- das Umlenkelement (17, 17') ist so angeordnet, daß seine Wirkungsrichtung zwischen der jeweiligen Wirkungsrichtung des Betätigungselements (10; 20) und des Kraftübertragungselements (15) liegt.

2. Vorrichtung nach Anspruch 1, dadurch gekennzeichnet, daß die Wirkungsrichtungen des Betätigungselements (10; 20) und des Kraftübertragungselements (15) einen Winkel von etwa 90° bilden.

3. Vorrichtung nach Anspruch 1, dadurch gekennzeichnet, daß die Wirkungsrichtungen des Betätigungselements (10; 20) und des Umlenkelements (17, 17') einen Winkel von etwa 90° bilden.

4. Vorrichtung nach Anspruch 1 oder 2, dadurch gekennzeichnet, daß die Wirkungsrichtung des Umlenkelements (17, 17') mit der Wirkungsrichtung des Betätigungselements (10; 20) und des Kraftübertragungselements (15) einen Winkel ($\alpha_1$, $\alpha_2$) von jeweils etwa 45° bildet.

5. Vorrichtung nach einem der Ansprüche 1 bis 4, dadurch gekennzeichnet, daß das Umlenkelement aus zwei Einzelelementen (17, 17') besteht und daß die Festpunkte (19, 19') für die beiden Elemente mit Abstand voneinander angeordnet sind.

6. Vorrichtung nach einem der Ansprüche 1 bis 5, dadurch gekennzeichnet, daß der Festpunkt (19) bzw. die Festpunkte (19, 19') des Umlenkelements (17, 17') verstellbar angeordnet ist bzw. sind.

7. Vorrichtung nach einem der Ansprüche 1 bis 6, dadurch gekennzeichnet, daß zwischen Betätigungselement (10) und Gelenk (14) ein mit dem Betätigungselement (10) gelenkig verbundenes Zwischenelement (13) angeordnet ist.

8. Vorrichtung nach einem der Ansprüche 1 bis 6, dadurch gekennzeichnet, daß das Betätigungselement (20) gelenkig am Festpunkt bzw. Fundament (6) angeordnet ist.

9. Vorrichtung nach Anspruch 1, dadurch gekennzeichnet, daß das Kraftübertragungselement (15) über ein Lenkerelement (30) mit dem Krafteinleitungselement (2) verbunden ist, daß das Lenkerelement (30) an seinem einen Ende über Gelenke (32, 33) mit dem Krafteinleitungselement (2) und an seinem anderen Ende mit einem schwenkbaren Gelenkpunkt (34) eines Hilfslenkers (35) verbunden ist und daß zwei weitere Gelenkpunkte des Hilfslenkers (35) als in einer Achse liegende Drehgelenke (36, 37) ausgebildet und an Festpunkten (38, 39) angeordnet sind.

10. Vorrichtung nach Anspruch 9, dadurch gekennzeichnet, daß das Lenkerelement (30) an seinem mit dem Krafteinleitungselement (2) verbundenen Ende gabelförmig ausgebildet ist, wobei die Gelenke (32, 33) an den Gabelenden angeordnet sind.

### Claims

1. Device for the introduction of forces into structures, especially into vehicle axles, wheel suspensions and the like, with a force introduction element (2), which can be connected to a structure (1) to be tested, with an actuating element (10; 20), which is supported at a fixed point, with an elongated, linkage-like force transmitting element (15) which acts on the force introduction element (2) and is arranged with respect to the actuating element (10; 20) such that its direction of action lies at an angle to that of the actuating element (10; 20), and also with a force deflection element supported on at least one further fixed point (19) by means of a first pivot (18, 18'), the direction of action of which force deflection element lies in a plane formed by the two above-mentioned directions of action and which deflects the actuating force exerted by the actuating element (10; 20) onto the force transmitting element (15), characterized by the following features:
   - the force deflection element is constructed as an elongated rod-shaped or tube-shaped deflection element (17, 17'),
   - one end of the deflection element (17, 17') is connected with a second pivot (14) connecting the actuating element (10; 20) and the force transmitting element (15),
   - the other end of the deflection element (17, 17') is joined to the first pivot (18, 18'),
   - the deflection element (17, 17') is arranged such that its direction of action lies between the respective direction of action of the actuating element (10; 20) and of the force transmitting element (15).

2. Device according to Claim 1, characterized in that the directions of action of the actuating element (10; 20) and of the force transmitting element (15) form an angle of approximately 90°.

3. Device according to Claim 1, characterized in that the directions of action of the actuating element (10; 20) and of the deflection element (17, 17') form an angle of approximately 90°.

4. Device according to Claim 1 or 2, characterized in that the direction of action of the deflection element (17, 17') forms with the direction of action of the actuating element (10; 20) and of the force transmitting element (15) an angle ($\alpha_1$, $\alpha_2$) of respectively approximately 45° each.

5. Device according to one of Claims 1 to 4, characterized in that the deflection element consists of two individual elements (17, 17') and that the fixed points (19, 19') for the two elements are arranged at a distance from each other.

6. Device according to one of Claims 1 to 5, characterized in that the fixed point (19) or respectively the fixed points (19, 19') of the deflection element (17, 17') is or respectively are arranged so as to be adjustable.

7. Device according to one of Claims 1 to 6, characterized in that between the actuating element (10) and the pivot (14) an intermediate element (13) is arranged which is pivotally connected with the actuating element (10).

8. Device according to one of Claims 1 to 6, characterized in that the actuating element (2) is pivotally mounted on the fixed point or respectively base (6).

9. Device according to Claim 1, characterized in that the force transmitting element (15) is connected with the force introduction element (2) via a guide element (30), that the guide element (30) is connected at one end via pivots (32, 33) with the force introduction element (2) and at its other end with a swingable pivot point (34) of an auxiliary guide (35) and that two further pivot points of the auxiliary guide (35) are constructed as swivel joints (36, 37) lying in one axis and are arranged on fixed points (38, 39).

10. Device according to Claim 9, characterized in that the guide element (30) is forked at its end which is connected with the force introduction element (2), the pivots (32, 33) being arranged at the fork ends.

## Revendications

1. Dispositif pour introduire des forces dans des éléments de structure, notamment dans des essieux de véhicule, des suspensiens de roues et l'analogue, comportant un élément d'introduction de forces (2) qui peut être relié à un élément de structure (1) à contrôler, un élément d'actionnement (10; 20) qui s'appuie sur un point fixe, un élément de transmission de forces allongé, du type barre (15) qui agit sur l'élément d'introduction de forces (2) et est disposé par rapport à l'élément d'actionnement (10; 20) de telle sorte que sen sens d'action fait un angle avec celui de l'élément d'actionnement (10; 20), ainsi qu'un élément de renvoi de forces s'appuyant sur au moins un autre point fixe (19) par l'intermédiaire d'un première articulation (18, 18'), élément dont le sens d'action se trouve dans un plan formé par les deux sens d'action précités et qui renvoie sur l'élément de transmission de forces (15) la force d'actionnement exercée par l'élément d'actionnement (10; 20), caractérisé par les caractéristiques suivantes:
- l'élément de renvoi de forces est réalisé sous forme d'élément de renvoi allongé (17, 17') en forme de barre ou de tube;
- l'une des extrémités de l'élément de renvoi (17, 17') est reliée à une seconde articulation (14) reliant l'élément d'actionnement (10; 20) et l'élément de transmission de forces (15);
- l'autre extrémité de l'élément de renvoi (17, 17') est reliée à la première articulation (18, 18');
- l'élément de renvoi (17, 17') est disposé de telle sorte que son sens d'action se trouve entre le sens d'action de l'élément d'actionnement (10; 20) et celui de l'élément de transmission de forces (15).

2. Dispositif selon la revendication 1, caractérisé en ce que les sens d'action de l'élément d'actionnement (10; 20) et de l'élément de transmission de force (15) font ensemble un angle de 90° environ.

3. Dispositif selon la revendication 1, caractérisé en ce que les sens d'action de l'élément d'actionnement (10; 20) et de l'élément de renvoi (17, 17') font ensemble un angle d'environ 90°.

4. Dispositif selon la revendication 1 ou 2, caractérisé en ce que le sens d'action de l'élément de renvoi (17, 17') fait avec le sens d'action, de l'élément d'actionnement (10; 20) et celui de l'élément de transmission de forces (15)

respectivement un angle ($\alpha_1$, $\alpha_2$) d'environ 45°.

5. Dispositif selon l'une des revendications 1 à 4, caractérisé en ce que l'élément de renvoi est constitué de deux éléments individuels (17, 17') et en ce que les points fixes (19, 19') pour les deux éléments sont distants l'un de l'autre.

6. Dispositif selon l'une des revendications 1 à 5, caractérisé en ce que le point fixe (19), ou les points fixes (19, 19') de l'élément de renvoi (17, 17') est, ou sont disposés de façon réglable.

7. Dispositif selon l'une des revendications 1 à 6, caractérisé en ce qu'on dispose entre l'élément d'actionnement (10) et l'articulation (14) un élément intermédiaire (13) articulé sur l'élément d'actionnement (10).

8. Dispositif selon l'une des revendications 1 à 6, caractérisé en ce que l'élément d'actionnement (20) est articulé sur un point fixe ou un soubassement (6).

9. Dispositif selon la revendication 1, caractérisé en ce que l'élément de transmission de forces (15) est relié par l'intermédiaire d'un bras (30) avec l'élément d'introduction de forces (2), en ce que le bras (30) est relié à l'une de ses extrémités par des articulations (32, 33) à l'élément d'introduction de forces (2) et à son autre extrémité à un point d'articulation pivotant (34) d'un bras auxiliaire (35) et en ce que deux autres points d'articulation du bras auxiliaire (35) sont réalisés sous forme d'articulations tournantes (36, 37) situées sur un axe et sont disposés sur des points fixes (38, 39).

10. Dispositif selon la revendication 9, caractérisé en ce que le bras (30) a la forme d'une chape à son extrémité reliée à l'élément d'introduction de forces (2), les articulations (32, 33) étant disposées aux extrémités de la chape.

FIG. 1

FIG. 2

FIG. 3

FIG. 4

# FIG. 5

FIG. 6

11    14    15    17 17'    16    3    2

α1    α2

10    6    18    19